# EUROPEAN PATENT SPECIFICATION

(11) **EP 2 490 281 B1**
(45) Date of publication and mention of the grant of the patent: **19.08.2015**
(21) Application number: 12153813.6
(22) Date of filing: 03.02.2012
(51) Int. Cl.: H01M 2/20, H01M 2/24, H01M 10/48, H01M 10/42

(54) **Battery Pack**
Batteriepack
Bloc-batteries

(30) Priority: 18.02.2011 US 201161444291 P; 27.01.2012 US 201213359869
(43) Date of publication of application: 22.08.2012
(73) Proprietor: Samsung SDI Co., Ltd., Yongin-si, Gyeonggi-do (KR)
(72) Inventor: Ahn, Janggun, Gyeonggi-do (KR)
(74) Representative: Gulde & Partner

(56) References cited:
- WO-A1-2010/067602
- US-A1- 2005 271 934
- US-A1- 2006 032 667
- US-A1- 2009 246 615

## Description

### BACKGROUND OF THE INVENTION

### 1. Field of the Invention

Embodiments of the present invention relate to a battery pack.

### 2. Description of the Related Art

A battery pack includes a plurality of battery cells, a connection tab connecting the battery cells to each other in series or parallel, a printed circuit module (PCM) controlling charging and discharging of the battery cells, and a coverlay electrically connecting the battery cells and the PCM.

### SUMMARY OF THE INVENTION

Embodiments are directed to a battery pack, which represents and advance in the related art.

It is a feature of an embodiment to provide a battery pack, which can prevent a short from being generated when an insulation film in the proximity of the coupling holes formed in the coverlay is broken by the connection tab due to external impacts and penetrates into the wire while or after the connection tab is assembled with the coverlay through the coupling holes.

An embodiment of the present invention provides a battery pack as described in claim 1, comprising: at least one battery cell; at least one connection tab electrically connected to the at least one battery cell, a protection circuit module adapted to control charging and discharging of the at least one battery cell, a coverlay electrically connecting the at least one battery cell to the protection circuit module, wherein the coverlay comprises an insulation film, at least one wire and at least one coupling hole which is formed in the insulation film, wherein the coverlay comprises at least one reinforcing member which surrounds at least a portion of the at least one coupling hole.

Preferably the at least one reinforcing member surrounds a first portion and/or a second portion of at least one coupling hole.

Preferably the at least one coupling hole comprises upper and lower portions, and the at least one reinforcing member surrounds the upper portion and/or the lower portion of at least one coupling hole.

Preferably the coverlay comprises a plurality of coupling holes and at least a portion of each of the coupling holes is surrounded by a reinforcing member. The at least one reinforcing member is embedded in the insulation film.

Preferably the reinforcing member comprises a first part which surrounds an upper portion of the coupling hole and a second part being separated from the first part, the second part surrounding a lower portion of the coupling hole.

Preferably the reinforcing member is integrally formed with one wire among a plurality of wires, and the reinforcing member comprises a first extension part which surrounds an upper portion of the coupling hole and a second extension part which surrounds a lower portion of the coupling hole.

Preferably the reinforcing member completely surrounds the coupling hole. Preferably the reinforcing member is exposed from the insulation film in a region of the coupling hole. Preferably the reinforcing member is completely embedded in the insulation film in a region of the coupling hole.

Preferably each connection tab comprises a battery contact portion connected to one of the battery cells, a pad contact portion extending from the battery contact portion and connected to the coverlay, and a bent portion positioned between the battery contact portion and the pad contact portion. Preferably the pad contact portion comprises a solder receiving hole. Preferably each of the coupling holes is spaced apart from an end of a wire which is located next to the coupling hole, wherein the distance between the coupling hole and the wire is shorter than a length of the pad contact portion of a connection tab which is located next to the coupling hole.

Preferably a battery connecting pad which is connected to one of the battery cells is formed at one end of the wire. Preferably a module connecting pad which is connected to the protection circuit module is formed at the other end of the wire.

An embodiment of the present invention provides a vehicle comprising the above-mentioned battery pack.

In the sense of the present invention, an electrically conductive material is preferably understood as a material having an electrical conductivity at 20°C of preferably at least 10² S/m, more preferably at least 10⁴ S/m, more preferably at least 10⁵ S/m, still more preferably at least 10⁶ S/m and still more preferably at least 10⁷ S/m. In the sense of the present invention, an electrically insulating material is preferably understood as a material having an electrical conductivity at 20°C of preferably less than 10⁻² S/m, more preferably less than 10⁻⁴ S/m, more preferably less than 10⁻⁶ S/m, still more preferably less than 10⁻⁸ S/m and still more preferably less than 10⁻¹⁰ S/m.

Preferably, the reinforcing member may be formed of a metal foil such as a copper foil, a nickel foil or a steel foil. Preferably, the reinforcing member is coated or plated with a metal such as copper, nickel or steel. In another preferred embodiment the reinforcing member is formed of an insulation tape.

Preferably, the reinforcing member is harder than the insulation film. In more particular, the hardness of the reinforcing member is preferably greater than the hardness of the insulation film. In the sense of the present invention, the hardness is determined according to the hardness measurement method of Brinell as e.g. disclosed in German Industrial Standard DIN EN ISO 6506-1 (03/2006) using HBW 10/3000 (measurement method HBW, sphere diameter 10 and a force of 3000 kilopond). More preferably, the hardness value of the reinforcing member is preferably two times greater, more preferably 10 times greater and still more preferably 20 times greater than the hardness value of the insulation film.

Preferably the reinforcing member is thicker than the insulation film. Preferably the insulation film comprises a thickness ranging between 0.05 to 0.1 mm. Preferably the reinforcing member comprises a thickness ranging between 0.1 to 0.2 mm. Preferably the thickness of the reinforcing member is equal to the thickness of the wire.

Preferably the coverlay at least partially covers a lateral surface of at least one of the battery cells.

Preferably the battery pack comprises a plurality of battery cells; a plurality of connection tabs electrically connecting the battery cells to each other, and the coverlay comprises a plurality of wires and a plurality of coupling holes which are formed in the insulation film, wherein at least one reinforcing member surrounds an upper portion and/or a lower portion of at least one coupling hole.

Preferably the reinforcing member comprises a hole, the hole having a shape equal to the shape of the corresponding coupling hole. Preferably the hole has a size equal to the size of the corresponding coupling hole.

Preferably the reinforcing member comprises a hole, the hole having a size greater than the size of the corresponding coupling hole. Preferably the centre of the hole coincides with the centre of the coupling hole.

Preferably each of the coupling holes comprises a longish shape with upper and lower edges.

An embodiment of the present invention provides a battery pack including a battery cells; a connection tab connecting the battery cells to each other in series or parallel, a coverlay having a wire and coupling holes formed at one side thereof to allow the connection tab to pass therethrough, the coverlay electrically connected to the connection tab, a (protection circuit module (PCM) electrically connected to the coverlay and controlling charging and discharging of the battery cells, and a reinforcing member surrounding at least both sides of upper and lower edges among outer peripheral portions of the coupling holes formed in the coverlay.

At one side of the connection tab are provided a battery contact portion connected to the battery cells, a pad contact portion extending from the battery contact portion and connected to the coverlay, and a bent portion positioned between the battery contact portion and the pad contact portion and bending the connection tab in a substantially 'inverted L'('¬') shape, wherein the pad contact portion has a cored-wire solder receiving hole formed therein.

The coupling holes are formed at a predetermined interval from one end of the wire, the predetermined interval may be shorter than a length of the pad contact portion.

The coverlay is a flexible printed circuit board (FPCB) formed by surrounding the wire by an insulation film. Preferably the wire is sandwiched between two insulation film layers. The wire is embedded within the insulation film. A battery connecting pad connected to the battery cells is formed at one end of the wire, and a module connecting pad connected to the PCM is formed at the other end of the wire.

An adhesive layer is formed on one surface of the coverlay to be connected to the battery cells, and the coverlay may have an opening exposing the battery connecting pad and the module connecting pad.

The reinforcing members may be formed on at least one of the one surface and the other surface of the coverlay.

In addition, the reinforcing members have holes corresponding to the coupling holes and entirely surround the outer peripheral portions of the coupling holes. The reinforcing members may be formed on at least one surface (among upper and lower surface) of the coverlay. Further, the reinforcing members may be formed inside the coverlay. In addition, the reinforcing members may be integrally formed with the wire.

The reinforcing members may be formed of an insulation tape, a metal, or the same material as the wire.

An embodiment of the present invention provides a vehicle comprising the above-mentioned battery pack.

In an embodiment of the present invention, it is possible to prevent a short from being generated when an insulation film in the proximity of the coupling holes formed in the coverlay is broken by the connection tab due to external impacts and penetrates into the wire while or after the connection tab is assembled with the coverlay through the coupling holes.

Additional aspects and/or advantages of the invention will be set forth in part in the description which follows and, in part, will be obvious from the description, or may be learned by practice of the invention.

### BRIEF DESCRIPTION OF THE DRAWINGS

The objects, features and advantages of the present invention will be more apparent from the following detailed description in conjunction with the accompanying drawings, in which:
FIG. 1 is a perspective view of a battery pack according to an embodiment of the present invention;
FIG. 2 is a cross-sectional view of a battery cell constituting the battery pack shown in FIG. 1;
FIG. 3 is a perspective view illustrating battery cells and connection tabs constituting the battery pack shown in FIG. 1;
FIG. 4A is a perspective view illustrating a first connection tab and a fifth connection tab constituting the battery pack shown in FIG. 1;
FIG. 4B is a perspective view illustrating a second connection tab and a fourth connection tab constituting the battery pack shown in FIG. 1;
FIG. 4C is a perspective view illustrating a third connection tab constituting the battery pack shown in FIG. 1;
FIG. 5 is a perspective view illustrating a coverlay according to an embodiment of the present invention;
FIG. 6A is a cross-sectional view of the coverlay shown in FIG. 5, taken along the line A-A';
FIG. 6B is a cross-sectional view of the coverlay shown in FIG. 5, taken along the line B-B';
FIG. 6C is a cross-sectional view of the coverlay shown in FIG. 5, taken along the line C-C'
FIG. 7A is a partially enlarged view of a portion 'D' shown in FIG. 6, including a reinforcing member according to an embodiment of the present invention;
FIG. 7B is a partially enlarged view of a reinforcing member according to another embodiment of the present invention;
FIG. 8 is a partially enlarged view of a reinforcing member according to still another embodiment of the present invention; and
FIG. 9 is a partially enlarged view of a reinforcing member according to a further embodiment of the present invention.

### DETAILED DESCRIPTION OF THE INVENTION

Hereinafter, embodiments of the present invention will be described in detail with reference to the accompanying drawings.

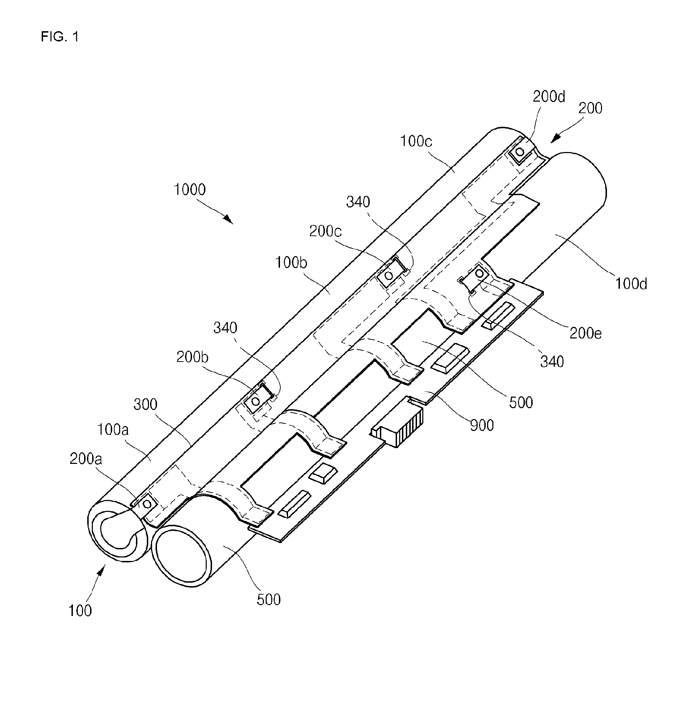

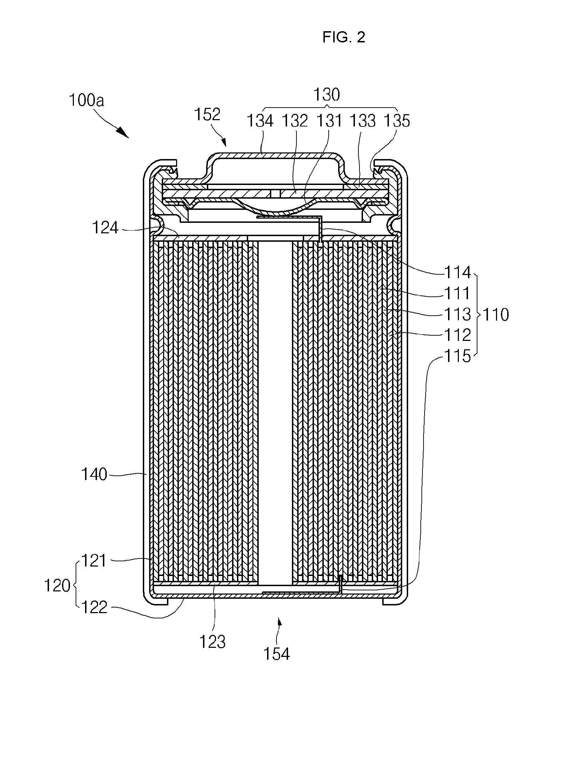

FIG. 1 is a perspective view of a battery pack according to an embodiment of the present invention, and FIG. 2 is a cross-sectional view of a battery cell constituting the battery pack shown in FIG. 1.

Referring to FIGS. 1 and 2, the battery pack 1000 according to the illustrated embodiment of the present invention may include battery cells 100, a connection tab 200, a coverlay 300, and a printed circuit module (PCM) 900. If necessary, the battery pack 1000 may further include dummy cells 500.

In the following description, the present invention will be described with regard to the battery pack 1000 including four battery cells 100 and two dummy cells 500 by way of example, but the present invention does not limit the numbers and shapes of the battery cells 100 and the dummy cells 500 to those illustrated herein.

The battery pack 100 includes a first battery cell 100a, a second battery cell 100b, a third battery cell 100c and a fourth battery cell 100d, which have cylindrical shapes.

Since the first to fourth battery cells 100a-100d are the same, the following description will be made with regard to only the first battery cell 1 00a.

The first battery cell 100a may include an electrode assembly 110, a can 120, a cap assembly 130 and a label 140.

The electrode assembly 110 includes a first electrode plate 111, a second electrode plate 112 and a separator 113 interposed between the first electrode plate 111 and the second electrode plate 112. The first electrode plate 111, the second electrode plate 112 and the separator 113 are wound together.

In addition, the electrode assembly 110 includes a first electrode lead 114 electrically connected to the first electrode plate 111, and a second electrode lead 115 electrically connected to the second electrode plate 112. The first electrode lead 114 is electrically connected to the cap assembly 130, and the second electrode lead 115 is electrically connected to the can 120.

Here, the first electrode plate 111 may be a positive electrode plate, and the second electrode plate 112 may be a negative electrode plate, or vice versa. In this embodiment, the first electrode plate 111 is a positive electrode plate, and the second electrode plate 112 is a negative electrode plate. Therefore, the cap assembly 130 electrically connected to the first electrode plate 111 may be a positive electrode terminal 152, and the can 120, specifically a bottom surface 122 of the can 120, may be a negative electrode terminal 154.

The electrode assembly 110 is housed in the can 120.

The can 120 is formed of a substantially cylindrical metal case having an opening at its top portion. The can 120 has a cylindrical surface 121 having a predetermined diameter and a bottom surface 122, providing for a space for housing the electrode assembly 110.

The electrode assembly 110, a lower insulation plate 123, and an upper insulation plate 124 are included within the space of the can 120. When the electrode assembly 110 is housed in the can 120, the lower insulation plate 123 and the upper insulation plate 124 may be provided at bottom and top portions of the electrode assembly 110 to prevent a short circuit between the first electrode plate 111 and the second electrode plate 112 of the electrode assembly 110 due to a contact therebetween.

The cap assembly 130 seals the opening of the can 120.

The cap assembly 130 includes a safety vent 131 inverted when an internal pressure of the battery cell 100a increases to greater than a predetermined level, a current breaker 132 provided above the safety vent 131 and electrically and mechanically connected thereto to then be disconnected when the safety vent 131 is inverted, a positive temperature coefficient (PTC) 133 provided above the current breaker 132 and electrically and mechanically connected thereto to then abruptly increase resistance when the internal temperature of the battery cell 100a, a cap-up 134 provided above the PTC 133 and electrically and mechanically connected thereto, and a gasket 135 insulating the safety vent 131, the current breaker 132, the PTC 133 and the cap-up 134 from the can 120 while surrounding side perimeters of the safety vent 131, the current breaker 132, the PTC 133 and the cap-up 134.

The label 140 covers at least the cylindrical surface 121 of the can 120 to protect the cylindrical surface 121 and allows the cap assembly 130, specifically the cap-up 134, serving as the positive electrode terminal 152, to be exposed to the outside, and the bottom surface 122 of the can 120, serving as the negative electrode terminal 154, to be exposed to the outside. The label 140 may be formed of a thermally shrinkable film.

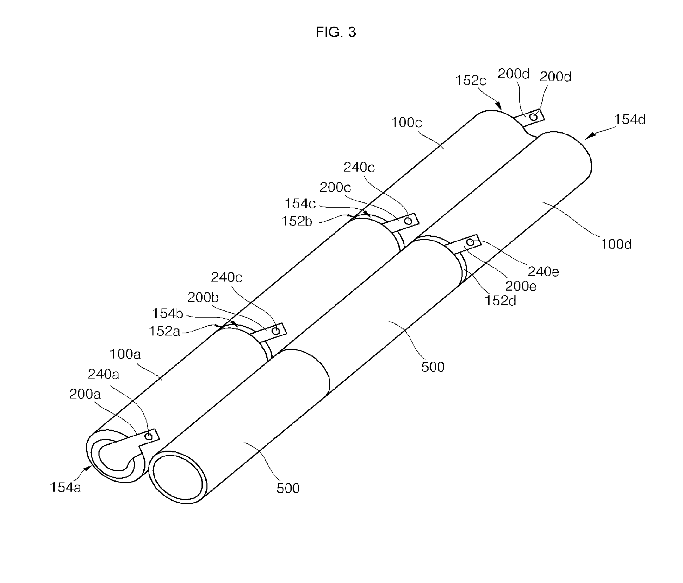

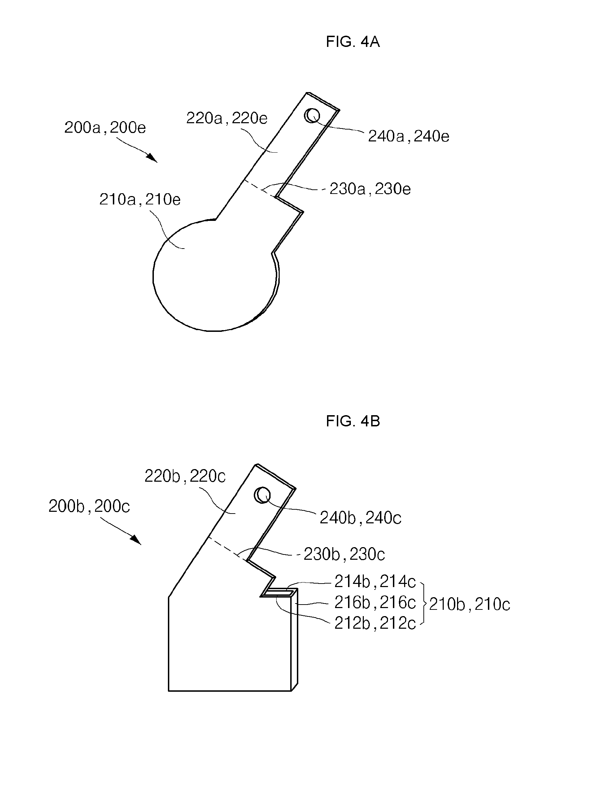

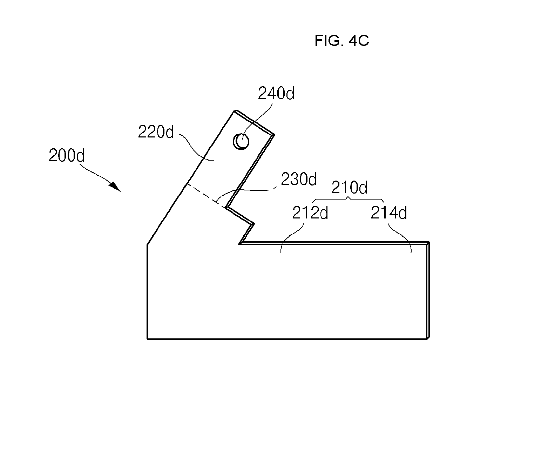

FIG. 3 is a perspective view illustrating battery cells and connection tabs constituting the battery pack shown in FIG. 1, FIG. 4A is a perspective view illustrating a first connection tab and a fifth connection tab constituting the battery pack shown in FIG. 1, FIG. 4B is a perspective view illustrating a second connection tab and a fourth connection tab constituting the battery pack shown in FIG. 1, and FIG. 4C is a perspective view illustrating a third connection tab constituting the battery pack shown in FIG. 1.

Referring to FIGS. 3 and 4A to 4C, the first battery cell 100a, the second battery cell 100b, the third battery cell 100c and the fourth battery cell 100d are serially connected to each other by the connection tab 200. Here, the battery pack 1000 may have two or more rows of the battery cells 100 arranged in consideration of the capacity and volume.

The connection tab 200 includes a first connection tab 200a, a second connection tab 200b, a third connection tab 200c, a fourth connection tab 200d and a fifth connection tab 200e.

The first connection tab 200a is connected to a negative electrode terminal of the first battery cell 100a, the second connection tab 200b is simultaneously connected to a positive electrode terminal of the first battery cell 100 and a negative electrode terminal of the second battery cell 100b, the third connection tab 200c is simultaneously connected to a positive electrode terminal of the second battery cell 100b and a negative electrode terminal of the third battery cell 100c, the fourth connection tab 200d is simultaneously connected to a positive electrode terminal of the third battery cell 100c and a negative electrode terminal of the fourth battery cell 100d, and the fifth connection tab 200e is connected to a positive electrode terminal of the fourth battery cell 100d. Therefore, the first connection tab 200a of the connection tab 200 becomes a negative electrode of the battery pack 1000, and the fifth connection tab 200e becomes a positive electrode of the battery pack 1000. The battery cells 100 and the connection tab 200 are coupled to each other by welding, and the welding may be resistance welding.

Since the first connection tab 200a and the fifth connection tab 200e are connected to an electrode terminal (a positive electrode terminal or a negative electrode terminal) of one of the battery cells 100, they have the same configuration and will now be described together.

Referring to FIG. 4A, the first connection tab 200a and the fifth connection tab 200e include battery contact portions 210a and 210e, pad contact portions 220a and 220e, bent portions 230a and 230e and cored-wire solder receiving holes 240a and 240e, respectively.

The battery contact portions 210a and 210e contact the battery cells 100, and may be configured such that portions thereof correspond to negative electrode terminals and positive electrode terminals of the battery cells 100.

The pad contact portions 220a and 220e are connected to the battery connecting pads 311 a and 311 e of the coverlay 300, which will later be described, and extend from one sides of the battery contact portions 210a and 210e.

The bent portions 230a and 230e are positioned between the battery contact portions 210a and 210e and the pad contact portions 220a and 220e, respectively, and correspond to regions where the first connection tab 200a and the fifth connection tab 200e are bent in a substantially 'inverted L'('¬') shape.

In more detail, the bent portions 230a and 230e are formed at locations where widths of the battery contact portions 210a and 210e are different from those of the pad contact portions 220a and 220e. Since the widths of the battery contact portions 210a and 210e are different from those of the pad contact portions 220a and 220e, when a force is applied to the pad contact portions 220a and 220e in a state in which the battery contact portions 210a and 210e are welded to the battery cells 100, the bent portions 230a and 230e are bent, so that the first connection tab 200a and the fifth connection tab 200e are bent in a substantially 'inverted L'('¬') shape.

Since the second connection tab 200b and the third connection tab 200c simultaneously contact the positive electrode terminal and the negative electrode terminal of one of the battery cells 100, they have the same configuration and will now be described together.

Referring to FIG. 4B, the second connection tab 200b and the third connection tab 200c include battery contact portions 210b and 210c, pad contact portions 220b and 220c, bent portions 230b and 230c, cored-wire solder receiving holes 240b and 240c, respectively.

Since the battery contact portions 210b and 210c contact two electrode terminals of opposing battery cells 100, they are formed by connecting plates 216b and 216c connecting the first battery contact plates 212b and 212c, the second battery contact plates 214b and 214c and the first battery contact plates 212b and 212c to the second battery contact plates 214b and 214c, respectively.

The first battery contact plates 212b and 212c and the second battery contact plates 214b and 214c are formed to be parallel with each other, and the connecting plates 216b and 216c connect and support the first battery contact plates 212b and 212c and the second battery contact plates 214b and 214c to each other.

The pad contact portions 220b and 220c are connected to the battery connecting pads 311 b and 311 c of the coverlay 300, which will later be described, and extend from one of the first battery contact plates 212b and 212c or the second battery contact plates 214b and 214c.

The bent portions 230b and 230c are positioned between the battery contact portions 210b and 210c and the pad contact portions 220b and 220c, respectively, and correspond to regions where the second connection tab 200b and the third connection tab 200c are bent in a substantially 'inverted L'('¬') shape.

In more detail, the bent portions 230b and 230b are formed at locations where widths of the battery contact portions 210b and 210c are different from those of the pad contact portions 220b and 220c. Since the widths of the battery contact portions 210b and 210c are different from those of the pad contact portions 220b and 220c, when a force is applied to the pad contact portions 220b and 220c in a state in which the battery contact portions 210b and 210c are welded to the battery cells 100, the bent portions 230b and 230c are bent, so that the second connection tab 200b and the third connection tab 200c are bent in a substantially 'inverted L' ('¬') shape.

Like the second and third connection tabs 200b and 200c, the fourth connection tab 200d contact the battery cells 100 of different columns, while they simultaneously contact the positive electrode terminal and the negative electrode terminal of the battery cells 100.

Referring to FIG. 4C, the fourth connection tab 200d includes a battery contact portion 210d, a pad contact portion 220d, a bent portion 230d and a cored-wire solder receiving hole 240d.

Since the battery contact portion 210d of the fourth connection tab 200d contact two electrode terminal parallel with each other, they have great widths, unlike the battery contact portions 210a and 210e of the first and fifth connection tabs 200a and 200e. The first battery contact plates 212b and 212c of the battery contact portions 210b and 210c shown in FIG. 4B, the connecting plates 216b and 216c and the second battery contact plates 214b and 214c are not bent but are straightly formed.

The pad contact portion 220d extends from the battery contact portion 210d, and contacts a battery connecting pad 311 d of the coverlay 300, which will later be described. That is to say, the pad contact portion 220d is welded to the battery connecting pad 311 d.

The bent portion 230d is positioned between the battery contact portion 210d and the pad contact portion 220d and is a region where the fourth connection tab 200d is bent in a substantially 'inverted L'('¬') shape.

In more detail, the bent portion 230d is formed at a location where a width of the battery contact portion 210d is different from that of the pad contact portion 220d. Since the width of the battery contact portion 210d is different from that of the pad contact portion 220d, when a force is applied to the pad contact portion 220d in a state in which the battery contact portion 210d is welded to the battery cells 100, the bent portion 230d is bent, so that the fourth connection tab 200d is bent in a substantially 'inverted L'('¬') shape, as shown in FIG. 1.

Cored-wire solder receiving holes 240a, 240b, 240c, 240d and 240e are positioned at ends of the pad contact portions 220a to 220e formed at the first connection tab 200a, the second connection tab 200b, the third connection tab 200c, the fourth connection tab 200d and the fifth connection tab 200e.

The cored-wire solder receiving holes 240a, 240b, 240c, 240d and 240e are connected to the battery connecting pads 311 a, 311b, 311c, 311d and 311e such that solder of a cored-wire solder layer 315 formed on the battery connecting pads 311 a, 311 b, 311c, 311 d and 311 e flows in and is solidified when they are welded to the battery connecting pads 311a, 311b, 311c, 311d and 311e of the coverlay 300, which will later be described.

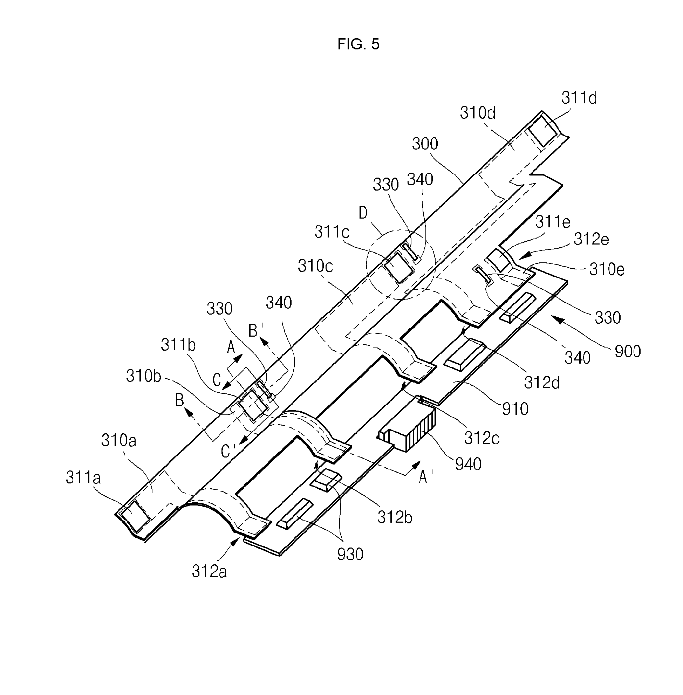

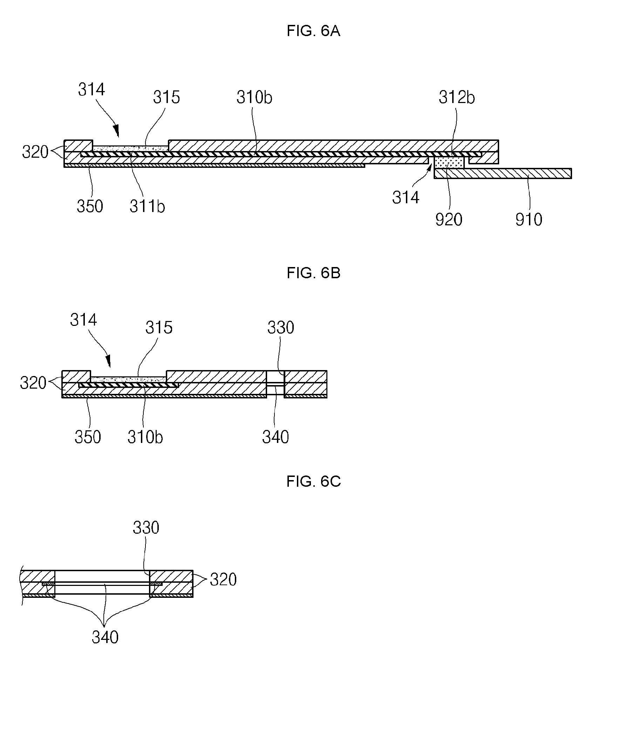

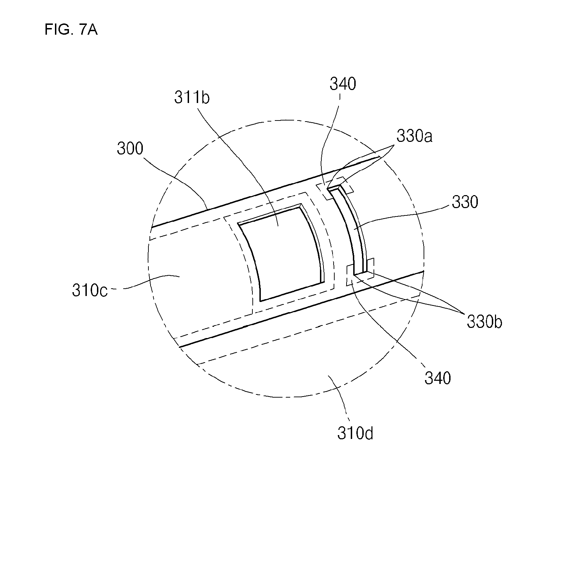

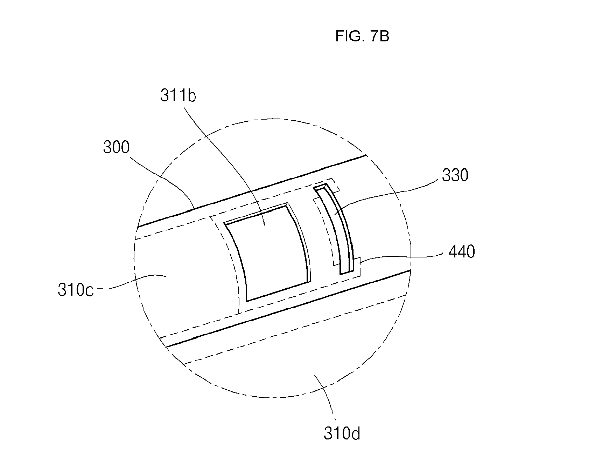

FIG. 5 is a perspective view illustrating a coverlay 300 according to an embodiment of the present invention, FIG. 6A is a cross-sectional view of the coverlay 300 shown in FIG. 5, taken along the line A-A', FIG. 6B is a cross-sectional view of the coverlay 300 shown in FIG. 5, taken along the line B-B', FIG. 6C is a cross-sectional view of the coverlay 300 shown in FIG. 5, taken along the line C-C', FIG. 7A is a partially enlarged view of a portion 'D' shown in FIG. 6, including reinforcing members according to an embodiment of the present invention, and FIG. 7B is a partially enlarged view of reinforcing members according to another embodiment of the present invention.

Referring to FIGS. 5 to 7B, the coverlay 300 partially covers lateral surfaces of the battery cells 100 and electrically connects the battery cells 100 to a PCM 900.

The coverlay 300 is a flexible printed circuit board (FPCB) including a wire 310, an insulation film 320, coupling holes 330, reinforcing members 340 and an adhesive layer 350.

The wire 310 is a path through which current from connection tabs 200 is transferred to the PCM 900, and one end thereof is connected to the connection tabs 200 and the other end thereof is connected to the PCM 900. Thus, there exist as many wires 310 as connection tabs 200.

The wires 310 respectively connected to first to fifth connection tabs 200a, 200b, 200c, 200d and 200e are denoted by reference numerals 310a, 310b, 310c, 310d, 310e, which will be described altogether.

Battery connecting pads 311 a, 311 b, 311 c, 311 d and 311 e are formed at one ends of the wires 310a, 310b, 310c, 310d and 310e, and module connecting pads 312a, 312b, 312c, 312d and 312e are formed at the other ends thereof.

The battery connecting pads 311 a, 311 b, 311 c, 311 d and 311 e are connected to the connection tab 200, and the module connecting pads 312a, 312b, 312c, 312d and 312e are connected to the PCM 900.

Each of the battery connecting pads 311 a, 311b, 311 c, 311 d and 311 e may further include a cored-wire solder layer 315.

The insulation film 320 may be made of polyimide. The insulation film 320 insulates the wires 310a, 310b, 310c, 310d and 310e from each other, and insulates the wires 310a, 310b, 310c, 310d and 310e from the outside. In addition, the insulation film 320 entirely surrounds the wires 310a, 310b, 310c, 310d and 310e.

Further, openings 314 are formed at locations of the insulation film 320, corresponding to the battery connecting pads 311 a, 311 b, 311 c, 311 d, 311 d and 311 e and the module connecting pads 312a, 312b, 312c, 312d and 312e, exposing the battery connecting pads 311 a, 311b, 311 c, 311 d, 311 d and 311 e and the module connecting pads 312a, 312b, 312c, 312d and 312e to the outside.

Coupling holes 330 are formed in the insulation film 320. The coupling holes 330 are positioned at locations corresponding to the connection tabs 200 and are spaced a predetermined distance apart from the wires 310. The connection tabs 200 pass through the coupling holes 330 and are connected to the battery connecting pads 311 a, 311 b, 311 c, 311 d and 311 e exposed through the openings 314. Therefore, the predetermined distance is shorter than a length of a pad contact portion of the connection tabs 200.

In the illustrated embodiment, the coupling holes 330 are formed at locations corresponding to a second connection tab 200b, a third connection tab 200c and a fifth connection tab 200e. However, as many coupling holes 330 as the connection tabs 200 may be formed at locations corresponding to the respective connection tabs 200. In addition, only one, at the least, of the connection tabs 200 may be formed.

The connection tabs 200 passing through the coupling holes 330 are bent in a substantially 'inverted L'('¬') shape by bent portions respectively formed in the connection tabs 200, and are welded to the battery connecting pads 311 a, 311 b, 311 c, 311 d and 311 e to fix the coverlay 300.

The reinforcing members 340 are formed in the proximity of the coupling holes 330. That is to say, the reinforcing members 340 are formed in the proximity of the coupling holes 330 formed in the coverlay 300 while contacting outer peripheral portions of the coupling holes 330. In addition, the reinforcing members 340 surround at least both sides of upper and lower edges among the outer peripheral portions of the coupling holes 330 and are spaced apart from the wire 310c (Fig. 7A, 8 and 9).

The reinforcing member 340 is preferably formed to contact the outer peripheral portion of the coupling hole 330.

In addition, the reinforcing member 340 may have any shape as long as it surrounds the upper edge 330a and a lower edge 330b, and may be made of an insulation tape, a metal, or the same material as the wire 310c. Like the wires 300, here, the reinforcing member 340 may be formed of a metal foil such as a copper foil, a nickel foil or a steel foil coated/plated with nickel. Thus, the reinforcing member 340 is harder than the insulation film 320 made of polyimide. In addition, in a case where an insulation tape is used as the insulation film 340, at the least the insulation tape should have a hardness which is the same as that of the metal foil. Furthermore, the reinforcing member 340 is thicker than the insulation film 320 having a thickness of 0.05 to 0.1 mm, and may have a thickness of 0.1 to 0.2 mm which is a thickness of the wires 310.

The reinforcing member 340 reinforces the coverlay 300. Thus, in the course of assembling the pad contact portion 220 of the connection tab 200c with the coupling hole 330, it is possible to prevent peripheral portions of the coupling hole 330 from being broken due to the edges of the connection tab 200c in a case where the respective locations of the pad contact portion 220 and the coupling hole 330 do not precisely coincide with each other, causing an interference fit or where the connection tab 200c moves during operation. In such a manner, the connection tab 200c is prevented from contacting another wire 310d formed in the proximity of the coupling hole 330, thereby preventing a short from being generated.

Further, the reinforcing member 340 can prevent the coverlay 300 from being broken due to movement of the connection tab 200c and the coverlay 300 due to external impacts even after the assembling, disabling the connection tab 200cto contact the wire 310d formed in the proximity of the coupling hole 330, thereby preventing a short from being generated.

Furthermore, in a case where the coverlay 300 is first connected to the PCM 900 and is then connected to the battery cells 100 in the course of manufacturing the battery pack 1000, in order to prevent damages from being applied to the PCM 900, the battery cells 100 are sequentially connected in order of a potential magnitude of the battery cell. However, since the reinforcing member 340 is additionally provided, electrical insulation between battery cells 100 and the PCM 900 is achieved by the reinforcing member 340 even in a state in which the connection tabs 200 are all fastened with the coupling holes 330 of the coverlay 300 with unbent portions, while electrical connection between battery cells 100 and the PCM 900 is achieved by bent portions formed in the connection tabs 200. Therefore, in a state in which the connection tabs 200 are fastened with the coupling holes 330, electrical connection from a low potential battery cell of to a high potential battery cell can be easily controlled simply forming the bent portions, thereby simplifying the assembling process.

As shown in FIG. 7B, the reinforcing member 440 may be integrally formed with the wire 310c. In the manufacturing process, in a case where the reinforcing member 340 and the wire 310c are separately formed, the coupling holes 330 and the reinforcing member 340 should be aligned to complete the coverlay 300. However, the reinforcing member 440 may be manufactured in consideration of sizes of the coupling holes 330 and distances therebetween while integrally forming the reinforcing member 440 with the wire 310c. Accordingly, the aligning of the reinforcing members 440 and the coupling holes 330 may not become a matter of great concern, thereby simplifying the manufacturing process. In addition, if the reinforcing member 440 is integrally formed with the wire 310c, movement of the reinforcing member 440 can be prevented even after being manufactured.

The adhesive layer 350 allows the coverlay 300 to be adhered to surfaces of the battery cells 100a, 100b, 100c and 100d.

The adhesive layer 350 may be formed by coating an adhesive agent or a double-sided tape on a surface of the coverlay 300.

The PCM 900 controls the battery pack 1000 and is connected to the module connecting pads 312a, 312b, 312c, 312d and 312e exposed by the openings 314.

In more detail, the PCM 900 includes a substrate 910, a contact pad 920 provided on the substrate 910 and connected to the wires 310a, 310b, 310c, 310d and 310e, control elements 930 provided on the substrate 910 and including IC devices, and an external connecting member 940 provided on a lateral surface of the substrate 910 and connecting the battery pack 1000 to an external device.

The PCM 900 may charge or discharge the respective battery cells 100a, 100b, 100c and 100d using the wires 310a, 310b, 310c, 310d and 310e, respectively.

A reinforcing member according to still another embodiment of the present invention will next be described.

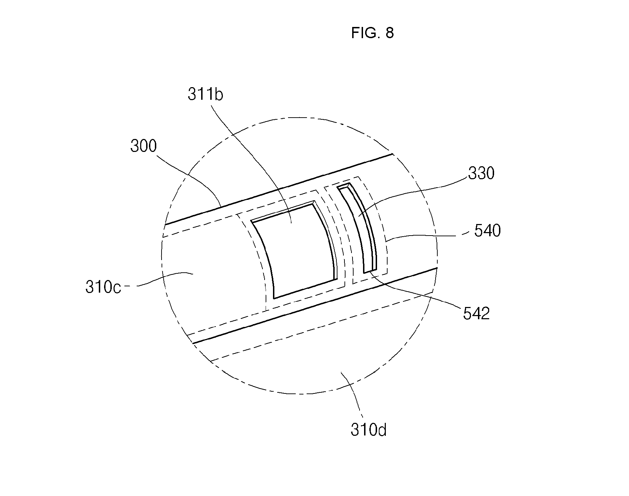

FIG. 8 is a partially enlarged view of a reinforcing member according to still another embodiment of the present invention.

Referring to FIG. 8, the battery pack according to the illustrated embodiment is different from the battery pack according to the previous embodiment in view of configuration of a reinforcing member 540. Thus, the following description will focus on the reinforcing member 540. In addition, since functional components other than the reinforcing member 540 are the same as those of the previous embodiment, they are denoted by the same reference numerals and repeated descriptions will not be given.

The reinforcing member 540 is formed to entirely surround the outer peripheral side of the coupling hole 330, and has a hole 542 sized and shaped to correspond to the coupling hole 330 at its center, i.e. preferably the shape, the size and the position of the hole 542 of the reinforcing member 540 are equal to the shape, the size and the position of the coupling hole 330. In addition, the reinforcing member 540 is spaced apart from the wire 310c and may be integrally formed with the wire 310c, like the reinforcing member 440 according to the previous embodiment shown in FIG. 7B.

The reinforcing member 540 may have any shape as long as it surrounds the outer peripheral side of the coupling hole 330, and may be made of an insulation tape, a metal, or the same material as the wire 310c

The same effects as in the previous embodiment shown in FIG. 7A can be exerted by forming the reinforcing member 540. However, unlike the reinforcing members 340 according to the previous embodiment shown in FIG. 7A, the reinforcing member 540 surrounds not only upper and lower portions of the coupling hole 330 but also the entire portions thereof. Thus, the reinforcing member 540 can reinforce not only the upper and lower portions of the coupling hole 330 but also lateral portions thereof. Accordingly, it is possible to prevent the connection tab 200c from being severely bent and protruding toward the lateral portions of the coupling holes 330. In addition, it is also possible to prevent the connection tab 200c from contacting another wire 310d formed in the proximity of the coupling hole 330, thereby preventing a short from being generated.
A reinforcing member according to a further embodiment of the present invention will next be described.

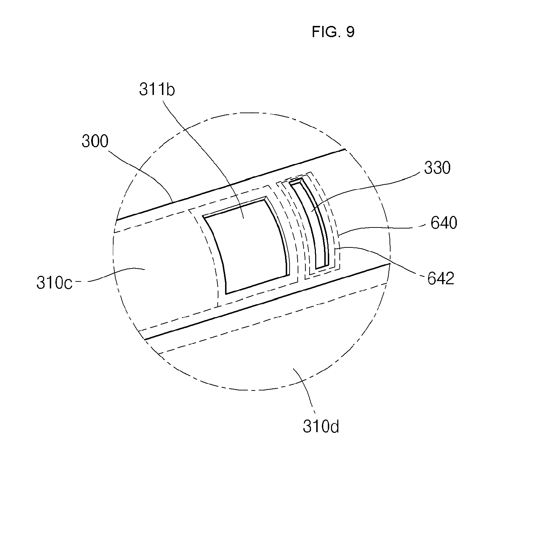

FIG. 9 is a partially enlarged view of a reinforcing member according to a further embodiment of the present invention.

Referring to FIG. 9, the battery pack according to the illustrated embodiment is different from the battery pack according to the previous embodiment in view of configuration of a reinforcing member 640. Thus, the following description will focus on the reinforcing member 640. In addition, since functional components other than the reinforcing member 640 are the same as those of the previous embodiment, they are denoted by the same reference numerals and repeated descriptions will not be given.

The reinforcing member 640 is formed to entirely surround outer peripheral sides of a coupling hole 330. A hole 642 shaped to correspond to the coupling hole 330 is formed at the center of the reinforcing member 640, and the size of the hole 642 is greater than that of the coupling hole 330. Further, preferably the center of the hole 642 coincides with the center of the hole 330. Thus, unlike in the previous embodiments, the reinforcing member 640 is not brought into contact with the outer peripheral sides of the coupling hole 330. In addition, the reinforcing member 640 is spaced apart from a wire 310c in the illustrated embodiment, it may also be integrally formed with the wire 310c, like the reinforcing member 440 according to the previous embodiment shown in FIG. 7B.

The reinforcing member 640 may have any shape as long as it entirely surrounds the outer peripheral sides of the coupling hole 330 and the size of the hole 642 formed in the reinforcing member 640 is greater than that of the coupling hole 330. In addition, the reinforcing member 640 may be made of an insulation tape, a metal, or the same material as the wire 310c.

The same effects as in the previous embodiment shown in FIG. 8 can be exerted by forming the reinforcing member 640. However, unlike the reinforcing members 540 according to the previous embodiment shown in FIG. 8, the size of the hole 642 formed in the reinforcing member 640 is greater than that of the coupling hole 330. Thus, the internal space of the hole 642 is larger than the internal space of the previous embodiment, so that locations of the connection tab 200c and the coupling hole 330 do not precisely coincide with each other, causing an interference fit. Even in such a case, the connection tab 200c and the coupling hole 330 can be easily assembled with each other.

Although exemplary embodiments of the present invention have been disclosed for illustrative purposes, those skilled in the art will appreciate that various modifications, additions and substitutions are possible, without departing from the scope of the invention as defined in the accompanying claims.

## Claims

1. A battery pack (1000) comprising:
at least one battery cell (100a, 100b, 100c, 100d, 100e);
at least one connection tab (200a, 200b, 200c, 200d, 200e) electrically connected to the at least one battery cell (100a, 100b, 100c, 100d, 100e),
a protection circuit module (900) adapted to control charging and discharging of the at least one battery cell (100a, 100b, 100c, 100d, 100e),
a coverlay (300) electrically connecting the at least one battery cell (100a, 100b, 100c, 100d, 100e) to the protection circuit module (900), wherein
the coverlay (300) comprises an insulation film (320), at least one wire (310a, 310b, 310c, 310d, 310e) and at least one coupling hole (330) which is formed in the insulation film (320),
**characterized in that**
the coverlay (300) comprises at least one reinforcing member (340, 440, 540, 640) which surrounds at least a portion of the at least one coupling hole (330), wherein the at least one reinforcing member (340, 440, 540, 640) is embedded in the insulation film (320).

2. The battery pack (1000) of claim 1, wherein the at least one reinforcing member (340, 440, 540, 640) surrounds a first portion (330a) and/or a second portion (330b) of at least one coupling hole (330).

3. The battery pack (1000) according to claim 1, wherein the at least one coupling hole (330) comprises upper and lower portions (330a, 330b), and wherein the at least one reinforcing member (340, 440, 540, 640) surrounds the upper portion (330a) and/or the lower portion (330b) of at least one coupling hole (330).

4. The battery pack (1000) according to any one of the preceding claims, wherein the coverlay (300) comprises a plurality of coupling holes (330) and at least a portion of each of the coupling holes (330) is surrounded by a reinforcing member (340, 440, 540, 640).

5. The battery pack (1000) according to any one of claims 3 to 4, wherein the reinforcing member (340) comprises a first part which surrounds an upper portion (330a) of the coupling hole (330) and a second part being separated from the first part, the second part surrounding a lower portion (330b) of the coupling hole (330).

6. The battery pack (1000) according to any one of claims 1 to 4, wherein the reinforcing member (440) is integrally formed with one wire (310c) among a plurality of wires (310a, 310b, 310c, 310d, 310e), and wherein the reinforcing member (440) comprises a first extension part which surrounds an upper portion (330a) of the coupling hole (330) and a second extension part which surrounds a lower portion (330b) of the coupling hole (330).

7. The battery pack (1000) according to any one of claim 1 to 4 and 6, wherein the reinforcing member (540, 640) completely surrounds the coupling hole (330).

8. The battery pack (1000) of claim 7, wherein the reinforcing member (540) is exposed from the insulation film (320) in a region of the coupling hole (330).

9. The battery pack (1000) of claim 7, wherein the reinforcing member (640) is completely embedded in the insulation film (320) in a region of the coupling hole (330).

10. The battery pack (1000) according to any one of the preceding claims, wherein each connection tab (200a, 200b, 200c, 200d, 200e) comprises a battery contact portion (210a, 210b, 210c, 210d, 210e) connected to one of the battery cells (100, 100a, 100b, 100c, 100d, 100e), a pad contact portion (220a, 220b, 220c, 220d, 220e) extending from the battery contact portion (210a, 210b, 210c, 210d, 210e) and connected to the coverlay (300), and a bent portion (230a, 230b, 230c, 230d, 230e) positioned between the battery contact portion (210a, 210b, 210c, 210d, 210e) and the pad contact portion (220a, 220b, 220c, 220d, 220e).

11. The battery pack (1000) of claim 10, wherein the pad contact portion (220a, 220b, 220c, 220d, 220e) comprises a solder receiving hole (240a, 240b, 240c, 240d, 240e).

12. The battery pack (1000) according to any one of claims 10 and 11, wherein each of the coupling holes (330) is spaced apart from an end of a wire (310, 310a, 310b, 310c, 310d, 310e) which is located next to the coupling hole (330), wherein the distance between the coupling hole (330) and the wire (310, 310a, 310b, 310c, 310d, 310e) is shorter than a length of the pad contact portion (220a, 220b, 220c, 220d, 220e) of a connection tab (200a, 200b, 200c, 200d, 200e) which is located next to the coupling hole (330).

13. The battery pack (1000) according to any one of the preceding claims, wherein a battery connecting pad (311 a, 311b, 311 c, 311 d, 311 e) which is connected to one of the battery cells (100a, 100b, 100c, 100d, 100e) is formed at one end of the wire (310, 310a, 310b, 310c, 310d, 310e), and/or a module connecting pad (312a, 312b, 312c, 312d, 312e) which is connected to the protection circuit module (900) is formed at the other end of the wire (310, 310a, 310b, 310c, 310d, 310e).

14. A vehicle comprising a battery pack (1000) according to any one of preceding claims.

## Patentansprüche

1. Batteriepack (1000), aufweisend:
zumindest eine Batteriezelle (100a, 100b, 100c, 100d, 100e);
zumindest eine Verbindungslasche (200a, 200b, 200c, 200d, 200e), die mit der zumindest einen Batteriezelle (100a, 100b, 100c, 100d, 100e) elektrisch verbunden ist,
ein Schutzschaltungsmodul (900), das angepasst ist, um das Laden und Entladen der zumindest einen Batteriezelle (100a, 100b, 100c, 100d, 100e) zu steuern,
eine Decklage (300), die die zumindest eine Batteriezelle (100a, 100b, 100c, 100d, 100e) elektrisch mit dem Schutzschaltungsmodul (900) verbindet, wobei
die Decklage (300) einen Isolierfilm (320), zumindest einen Draht (310a, 310b, 310c, 310d, 310e) und zumindest ein Kopplungsloch (330), das im Isolierfilm (320) ausgebildet ist, aufweist,
**dadurch gekennzeichnet, dass**
die Decklage (300) zumindest ein Verstärkungsglied (340, 440, 540, 640), das zumindest einen Abschnitt des zumindest einen Kopplungslochs (330) umgibt, aufweist, wobei das zumindest eine Verstärkungsglied (340, 440, 540, 640) im Isolierfilm (320) eingebettet ist.

2. Batteriepack (1000) nach Anspruch 1, wobei das zumindest eine Verstärkungsglied (340, 440, 540, 640) einen ersten Abschnitt (330a) und/oder einen zweiten Abschnitt (330b) des zumindest einen Kopplungslochs (330) umgibt.

3. Batteriepack (1000) nach Anspruch 1, wobei das zumindest eine Kopplungsloch (330) einen oberen und unteren Abschnitt (330a, 330b) aufweist, und wobei das zumindest eine Verstärkungsglied (340, 440, 540, 640) den oberen Abschnitt (330a) und/oder den unteren Abschnitt (330b) des zumindest einen Kopplungslochs (330) umgibt.

4. Batteriepack (1000) nach einem der vorhergehenden Ansprüche, wobei die Decklage (300) eine Vielzahl von Kopplungslöchern (330) aufweist und zumindest ein Abschnitt von jedem der Kopplungslöcher (330) von einem Verstärkungsglied (340, 440, 540, 640) umgeben ist.

5. Batteriepack (1000) nach einem der Ansprüche 3 bis 4, wobei das Verstärkungsglied (340) einen ersten Teil, der einen oberen Abschnitt (330a) des Kopplungslochs (330) umgibt, und einen zweiten Teil, der vom ersten Teil getrennt ist, aufweist, wobei der zweite Teil einen unteren Abschnitt (330b) des Kopplungslochs (330) umgibt.

6. Batteriepack (1000) nach einem der Ansprüche 1 bis 4, wobei das Verstärkungsglied (440) einstückig mit einem Draht (310c) aus einer Vielzahl von Drähten (310a, 310b, 310c, 310d, 310e) ausgebildet ist, und wobei das Verstärkungsglied (440) einen ersten Erstreckungsteil, der einen oberen Abschnitt (330a) des Kopplungslochs (330) umgibt, und einen zweiten Erstreckungsteil, der einen unteren Abschnitt (330b) des Kopplungslochs (330) umgibt, aufweist.

7. Batteriepack (1000) nach einem der Ansprüche 1 bis 4 und 6, wobei das Verstärkungsglied (540, 640) das Kopplungsloch (330) vollständig umgibt.

8. Batteriepack (1000) nach Anspruch 7, wobei das Verstärkungsglied (540) in einem Bereich des Kopplungslochs (330) vom Isolierfilm (320) freigelegt ist.

9. Batteriepack (1000) nach Anspruch 7, wobei das Verstärkungsglied (640) in einem Bereich des Kopplungslochs (330) vollständig im Isolierfilm (320) eingebettet ist.

10. Batteriepack (1000) nach einem der vorhergehenden Ansprüche, wobei jede Verbindungslasche (200a, 200b, 200c, 200d, 200e) einen Batteriekontaktabschnitt (210a, 210b, 210c, 210d, 210e), der mit einer der Batteriezellen (100, 100a, 100b, 100c, 100d, 100e) verbunden ist, einen Kontaktfeldabschnitt (220a, 220b, 220c, 220d, 220e), der sich vom Batteriekontaktabschnitt (210a, 210b, 210c, 210d, 210e) erstreckt und mit der Decklage (300) verbunden ist, und einen gebogenen Abschnitt (230a, 230b, 230c, 230d, 230e), der zwischen dem Batteriekontaktabschnitt (210a, 210b, 210c, 210d, 210e) und dem Kontaktfeldabschnitt (220a, 220b, 220c, 220d, 220e) positioniert ist, aufweist.

11. Batteriepack (1000) nach Anspruch 10, wobei der Kontaktfeldabschnitt (220a, 220b, 220c, 220d, 220e) ein Lotaufnahmeloch (240a, 240b, 240c, 240d, 240e) aufweist.

12. Batteriepack (1000) nach einem der Ansprüche 10 und 11, wobei jedes der Kopplungslöcher (330) von einem Ende eines Drahts (310, 310a, 310b, 310c, 310d, 310e), das sich neben dem Kopplungsloch (330) befindet, beabstandet ist, wobei der Abstand zwischen dem Kopplungsloch (330) und dem Draht (310, 310a, 310b, 310c, 310d, 310e) kürzer ist als eine Länge des Kontaktfeldabschnitts (220a, 220b, 220c, 220d, 220e) einer Verbindungslasche (200a, 200b, 200c, 200d, 200e), der sich neben dem Kopplungsloch (330) befindet.

13. Batteriepack (1000) nach einem der vorhergehenden Ansprüche, wobei ein Batterieverbindungsfeld (311a, 311b, 311c, 311d, 311e), das mit einer der Batteriezellen (100a, 100b, 100c, 100d, 100e) verbunden ist, an einem Ende des Drahts (310, 310a, 310b, 310c, 310d, 310e) ausgebildet ist und/oder ein Modulverbindungsfeld (312a, 312b, 312c, 312d, 312e), das mit dem Schutzschaltungsmodul (900) verbunden ist, am anderen Ende des Drahts (310, 310a, 310b, 310c, 310d, 310e) ausgebildet ist.

14. Fahrzeug, aufweisend einen Batteriepack (1000) nach einem der vorhergehenden Ansprüche.

## Revendications

1. Bloc-batteries (1000) comprenant :
au moins un élément de batterie (100a, 100b, 100c, 100d, 100e) ;
au moins une languette de raccordement (200a, 200b, 200c, 200d, 200e) électriquement raccordée au au moins un élément de batterie (100a, 100b, 100c, 100d, 100e),
un module de circuit de protection (900) adapté pour contrôler la charge et la décharge du au moins un élément de batterie (100a, 100b, 100c, 100d, 100e),
une couche de fermeture (300) raccordant électriquement le au moins un élément de batterie (100a, 100b, 100c, 100d, 100e) au module de circuit de protection (900), dans lequel :
une couche de fermeture (300) comprend un film d'isolation (320), au moins un fil (310a, 310b, 310c, 310d, 310e) et au moins un trou de couplage (330) qui est formé dans le film d'isolation (320),
caractérisé en ce qui :
la couche de fermeture (300) comprend au moins un élément de renforcement (340, 440, 540, 640) qui entoure au moins une partie du au moins un trou de couplage (330), dans lequel le au moins un élément de renforcement (340, 440, 540, 640) est encastré dans le film d'isolation (320).

2. Bloc-batteries (1000) selon la revendication 1, dans lequel le au moins un élément de renforcement (340, 440, 540, 640) entoure une première partie (330a) et/ou une seconde partie (330b) d'au moins un trou de couplage (330).

3. Bloc-batteries (1000) selon la revendication 1, dans lequel le au moins un trou de couplage (330) comprend des parties supérieure et inférieure (330a, 330b) et dans lequel le au moins un élément de renforcement (340, 440, 540, 640) entoure la partie supérieure (330a) et/ou la partie inférieure (330b) du au moins un trou de couplage (330) .

4. Bloc-batteries (1000) selon l'une quelconque des revendications précédentes, dans lequel la couche de fermeture (300) comprend une pluralité de trous de couplage (330) et au moins une partie de chacun des trous de couplage (330) est entourée par un élément de renforcement (340, 440, 540, 640).

5. Bloc-batteries (1000) selon l'une quelconque des revendications 3 à 4, dans lequel l'élément de renforcement (340) comprend une première partie qui entoure une partie supérieure (330a) du trou de couplage (330) et une seconde partie qui est séparée de la première partie, la seconde partie entourant une partie inférieure (330b) du trou de couplage (330).

6. Bloc-batteries (1000) selon l'une quelconque des revendications 1 à 4, dans lequel l'élément de renforcement (440) est formé de manière solidaire avec un fil (310c) parmi une pluralité de fils (310a, 310b, 310c, 310d, 310e) et dans lequel l'élément de renforcement (440) comprend une première partie d'extension qui entoure une partie supérieure (330a) du trou de couplage (330) et une seconde partie d'extension qui entoure une partie inférieure (330b) du trou de couplage (330).

7. Bloc-batteries (1000) selon l'une quelconque des revendications 1 à 4 et 6, dans lequel l'élément de renforcement (540, 640) entoure complètement le trou de couplage (330).

8. Bloc-batteries (1000) selon la revendication 7, dans lequel l'élément de renforcement (540) est exposé à partir du film d'isolation (320) dans une région du trou de couplage (330).

9. Bloc-batteries (1000) selon la revendication 7, dans lequel l'élément de renforcement (640) est complètement encastré dans le film d'isolation (320) dans une région du trou de couplage (330).

10. Bloc-batteries (1000) selon l'une quelconque des revendications précédentes, dans lequel chaque languette de raccordement (200a, 200b, 200c, 200d, 200e) comprend une partie de contact de batterie (210a, 210b, 210c, 210d, 210e) raccordée à l'un des éléments de batterie (100, 100a, 100b, 100c, 100d, 100e), une partie de contact de languette de connexion (220a, 220b, 220c, 220d, 220e) s'étendant à partir de la partie de contact de batterie (210a, 210b, 210c, 210d, 210e) et raccordée à la couche de fermeture (300), et une partie pliée (230a, 230b, 230c, 230d, 230e) positionnée entre la partie de contact de batterie (210a, 210b, 210c, 210d, 210e) et la partie de contact de languette de connexion (220a, 220b, 220c, 220d, 220e).

11. Bloc-batteries (1000) selon la revendication 10, dans lequel la partie de contact de languette de connexion (220a, 220b, 220c, 220d, 220e) comprend un trou de réception de soudure (240a, 240b, 240c, 240d, 240e).

12. Bloc-batteries (1000) selon l'une quelconque des revendications 10 et 11, dans lequel chacun des trous de couplage (330) est espacé d'une extrémité d'un fil (310, 310a, 310b, 310c, 310d, 310e) qui est positionnée à côté du trou de couplage (330), dans lequel la distance entre le trou de couplage (330) et le fil (310, 310a, 310b, 310c, 310d, 310e) est plus courte qu'une longueur de la partie de contact de languette de connexion (220a, 220b, 220c, 220d, 220e) d'une languette de raccordement (200a, 200b, 200c, 200d, 200e) qui est positionnée à proximité du trou de couplage (330).

13. Bloc-batteries (1000) selon l'une quelconque des revendications précédentes, dans lequel une languette de connexion de raccordement de batterie (311a, 311b, 331c, 311d, 311e) qui est raccordée à l'un des éléments de batterie (100a, 100b, 100c, 100d, 100e) est formée au niveau d'une extrémité du fil (310, 310a, 310b, 310c, 310d, 310e) et/ou une languette de connexion de raccordement de module (312a, 312b, 312c, 312d, 312e) qui est raccordée au module de circuit de protection (900) est formée au niveau de l'autre extrémité du fil (310, 310a, 310b, 310c, 310d, 310e) .

14. Véhicule comprenant un bloc-batteries (1000) selon l'une quelconque des revendications précédentes.
